# EUROPÄISCHE PATENTSCHRIFT

(11) **EP 3 429 805 B1**
(45) Veröffentlichungstag und Bekanntmachung des Hinweises auf die Patenterteilung: **21.10.2026**
(21) Anmeldenummer: 17711088.9
(22) Anmeldetag: 13.03.2017
(51) Int. Cl.: B25J 9/16, G05B 19/42

(54) **STEUERN EINER AUTOMATISIERUNGSANORDNUNG**
CONTROLLING AN AUTOMATION ASSEMBLY
COMMANDE D'UN DISPOSITIF D'AUTOMATISATION

(30) Priorität: 15.03.2016 DE 102016003144
(43) Veröffentlichungstag der Anmeldung: 23.01.2019
(73) Patentinhaber: KUKA Deutschland GmbH, 86165 Augsburg (DE)
(72) Erfinder: RADRICH, Helmuth, 78758 Austin, Texas (US)
(74) Vertreter: Schlotter, Alexander Carolus Paul
(86) Internationale Anmeldenummer: PCT/EP2017/000329
(87) Internationale Veröffentlichungsnummer: WO 2017/157515

(56) Entgegenhaltungen:
- EP-A1- 0 474 881
- US-A1- 2015 336 268
- SHUJUN LU ET AL: "Human-Robot Collision Detection and Identification Based on Wrist and Base Force/Torque Sensors", ROBOTICS AND AUTOMATION, 2005. PROCEEDINGS OF THE 2005 IEEE INTERNATIONAL CONFERENCE ON BARCELONA, SPAIN 18-22 APRIL 2005, PISCATAWAY, NJ, USA,IEEE, 18 April 2005 (2005-04-18), pages 3796 - 3801, XP010871485, ISBN: 978-0-7803-8914-4, DOI: 10.1109/ROBOT.2005.1570699
- DANIEL KAPPLER ET AL: "Data-Driven Online Decision Making for Autonomous Manipulation", ROBOTICS: SCIENCE AND SYSTEMS XI, 13 July 2015 (2015-07-13), XP055389349, ISBN: 978-0-9923747-1-6, DOI: 10.15607/RSS.2015.XI.044
- CHIEN-MING HUANG ET AL: "Anticipatory Robot Control for Efficient Human-Robot Collaboration", HUMAN ROBOT INTERATION, IEEE PRESS, 445 HOES LANE, PO BOX 1331, PISCATAWAY, NJ 08855-1331 USA, 7 March 2016 (2016-03-07), pages 83 - 90, XP058081763, ISBN: 978-1-4673-8370-7

## Beschreibung

Die vorliegende Erfindung betrifft ein Verfahren zum Steuern einer Automatisierungsanordnung, die eine Roboteranordnung mit wenigstens einem Roboter und eine Erfassungsmittelanordnung mit wenigstens einem Erfassungsmittel aufweist, sowie ein System und ein Computerprogrammprodukt zur Durchführung des Verfahrens und eine Anordnung mit der Automatisierungsanordnung und dem System.

Roboteranordnungen mit einem oder mehreren Robotern, insbesondere mit Menschen kollaborierende Roboter(anordnungen), sollen, insbesondere im wenigstens teilweise automatisierten, Betrieb, in dem sie ein Programm abarbeiten, häufig auf Ereignisse reagieren, die durch Erfassungsmittel erfasst werden. So soll beispielsweise ein Roboter eine Einführbewegung beenden, wenn eine von ihm ausgeübte Fügekraft einen ausreichenden Grenzwert erreicht hat, der ein korrektes Fügen anzeigt, oder umorientieren und/oder -positionieren, wenn eine Kontaktkraft einen anderen Grenzwert übersteigt, der beispielsweise eine inkorrekte Fügeposition anzeigt.

Die Definition solcher Ereignisse und deren Parametrierung, beispielsweise also die Auswahl geeigneter Messdaten und Grenzwerte hierfür, stellt bisher einen Großteil der Arbeit zum Generieren oder Modifizieren von Programmen für Automatisierungsanordnungen mit Roboter- und Erfassungsmittelanordnungen dar.

Ein aus der US 2015/0336268 A1 bekanntes Verfahren zum Trainieren eines Roboters zum automatischen Ausführen einer Roboteraufgabe umfasst, dass ein Greiforgan durch mehrere Zustände einer vorbestimmten Roboteraufgabe bewegt wird, um dem Roboter die Aufgabe in einem Satz von n Trainingsdemonstrationen zu demonstrieren, dass Trainingsdaten, welche mindestens die lineare Kraft und das Drehmoment umfassen, mit Hilfe eines Kraft-Drehmoment-Sensors gemessen werden, während das Greiforgan durch die mehreren Zustände bewegt wird, dass Schlüsselmerkmale aus den Trainingsdaten extrahiert werden, welche in eine Zeitsequenz aus Steuerungsprimitiven segmentiert werden, und dass Übergänge zwischen benachbarten Segmenten der Zeitsequenz identifiziert werden. Während einer autonomen Ausführung der gleichen Aufgabe detektiert ein Controller die Übergänge und schaltet automatisch zwischen Steuerungsmodi um. In der akademischen Veröffentlichung von Shujun LuChung J HVelinsky S A, mit dem Titel "Human-Robot Collision Detection and Identification Based on Wrist and Base Force/Torque Sensors" wird ein Kollisionserfassungs- und -identifizierungsverfahren eines Manipulators unter Verwendung von Basis- und Handgelenkkraft/Drehmomentsensoren präsentiert. Ein Aufprallmodell wird verwendet, um die Wechselwirkung zwischen dem Manipulator und dem Menschen oder der Umgebung zu simulieren. Es wird ein Ansatz eines neuronalen Netzwerks zu einem modellbasierten Verfahren entwickelt, um die Kollisionskräfte und Störmomente an den Gelenken des Manipulators zu erfassen.

Aufgabe der vorliegenden Erfindung ist es, das Steuern von Automatisierungsanordnungen mit Roboter- und Erfassungsmittelanordnungen zu verbessern.

Diese Aufgabe wird durch ein Verfahren mit den Merkmalen des Anspruchs 1 gelöst. Ansprüche 12 bis 14 stellen ein System und ein Computerprogrammprodukt zur Durchführung eines hier beschriebenen Verfahrens bzw. eine Anordnung mit einer Automatisierungsanordnung und einem hier beschriebenen System zum Steuern der Automatisierungsanordnung unter Schutz. Die Unteransprüche betreffen vorteilhafte Weiterbildungen.

Nach einer Ausführung der vorliegenden Erfindung weist eine Roboteranordnung einen oder mehrere Roboter auf, wobei der bzw. einer oder mehrere der Roboter in einer Weiterbildung (jeweils) wenigstens drei, insbesondere wenigstens sechs, insbesondere wenigstens sieben, Gelenke, insbesondere Drehgelenke, und Antriebe zum, insbesondere (elektro)motorischen, hydraulischen und/oder pneumatischen, Bewegen bzw. Verstellen dieser Gelenke aufweisen.

Nach einer Ausführung der vorliegenden Erfindung weist eine Erfassungsmittelanordnung ein oder mehrere Erfassungsmittel auf, wobei das bzw. eines oder mehrere der Erfassungsmittel in einer Weiterbildung (jeweils) Kräfte der Roboteranordnung erfassen bzw. hierzu, insbesondere hard- und/oder softwaretechnisch, eingerichtet sind.

Eine (von der Erfassungsmittelanordnung bzw. einem ihrer Erfassungsmittel erfassbare, insbesondere erfasste) Kraft der Roboteranordnung kann in einer Ausführung insbesondere eine auf einen Roboter der Roboteranordnung wirkende Kraft oder eine von einem Roboter der Roboteranordnung ausgeübte Kraft und insbesondere eine Kraft in wenigstens einem Gelenk eines Roboter der Roboteranordnung umfassen, insbesondere sein. Zur kompakteren Darstellung werden vorliegend antiparallele Kräftepaare bzw. (Dreh)Momente verallgemeinernd ebenfalls als Kräfte bezeichnet.

Zusätzlich oder alternativ können in einer Ausführung das bzw. eines oder mehrere der Erfassungsmittel der Erfassungsmittelanordnung (jeweils) Positionen und/oder Zeitableitungen hiervon, insbesondere Geschwindigkeiten, eines oder mehrerer Roboter der Roboteranordnung erfassen bzw. hierzu, insbesondere hard- und/oder softwaretechnisch, eingerichtet sein. Eine Position kann in einer Ausführung eine ein-, zwei- oder dreidimensionale Lage und/oder Orientierung einer roboterfesten Referenz, insbesondere eines TCPs, umfassen, insbesondere sein. Zusätzlich oder alternativ kann in einer Ausführung eine Position (jeweils) eine Stellung eines oder mehrerer Gelenke eines Roboters umfassen, insbesondere sein.

In einer Ausführung weist wenigstens ein Erfassungsmittel ein oder mehrere, insbesondere elektrische, insbesondere kapazitive und/oder induktive, taktile und/oder optische Sensoren, insbesondere wenigstens eine Kamera und/oder wenigstens einen, insbesondere roboterinternen, Kraft-, insbesondere (Dreh)Momentensensor, insbesondere also einen Gelenkmomentensensor, und/oder wenigstens einen, insbesondere roboterinternen, Positions- und/oder Geschwindigkeitssensor auf.

Nach einer Ausführung der vorliegenden Erfindung weist eine Automatisierungsanordnung die Roboteranordnung und die Erfassungsmittelanordnung auf. In einer Weiterbildung der vorliegenden Erfindung weist eine Anordnung die Automatisierungsanordnung und ein System zum Steuern der Automatisierungsanordnung auf.

Ein erfindungsgemäßes Verfahren zum Steuern der Automatisierungsanordnung ist in Anspruch 1 angegeben und weist unter anderem die Schritte auf:
- vollständig oder teilweise automatisiertes Bereitstellen (wenigstens) einer Sequenz von Ordinatendaten, die aufeinanderfolgenden Abszissenpunkten zugeordnet sind, auf Basis von Trainingsdaten;
- vollständig oder teilweise automatisiertes Identifizieren (wenigstens) eines Ereignispunktes innerhalb dieser Abszissenpunkte dieser bereitgestellten Sequenz; und
- vollständig oder teilweise automatisiertes Bestimmen (wenigstens) eines Ereigniskriteriums auf Basis dieser bereitgestellten Sequenz und dieses identifizieren Ereignispunktes,
wobei diese vorliegend ohne Beschränkung der Allgemeinheit als erste Sequenz, erste Abszissenpunkte, erste Ordinatendaten, erste Trainingsdaten, erster Ereignispunkt bzw. erstes Ereigniskriterium bezeichnet werden.

Aufeinanderfolgende Abszissenpunkte können in einer Ausführung insbesondere aufeinanderfolgende Zeitpunkte umfassen, insbesondere sein, Ordinatendaten entsprechend insbesondere Zeitreihen. Zusätzlich oder alternativ können in einer Ausführung Abszissenpunkte Bahn(parameter)punkte oder dergleichen umfassen, insbesondere sein. In einer Ausführung folgen Abszissenpunkte (wenigstens quasi)kontinuierlich oder diskret aufeinander und/oder sind ein- oder mehrdimensionalen Ordinatendaten(werten) in- und/oder surjektiv, insbesondere bijektiv zugeordnet.

Ein Ereignispunkt kann in einer Ausführung insbesondere ein Abszissenpunkt sein oder zwischen zwei aufeinanderfolgenden Abszissenpunkten liegen.

Ein Ereigniskriterium definiert in einer Ausführung eine ein- oder mehrdimensionale Bedingung für Ordinatendaten, insbesondere einen oder mehrere obere und/oder untere Grenzwerte, Verläufe, Status oder dergleichen, insbesondere für das Eintreten bzw. Vorliegen eines zu detektierenden Ereignisses bzw. zum Detektieren eines Ereignisses, insbesondere im Betrieb der Automatisierungsanordnung, insbesondere der Roboteranordnung, insbesondere eines Umgebungskontaktes, Erreichen eines (Programm)Schaltpunktes oder dergleichen.

Durch das wenigstens teilweise automatisierte Bestimmen eines Ereigniskriteriums auf Basis einer Sequenz von Ordinatendaten und eines identifizierten Ereignispunktes innerhalb von deren Abszissenpunkten kann in einer Ausführung die Definition von Ereignissen, auf die die Roboteranordnung im Betrieb reagieren soll, und insbesondere deren Parametrierung, beispielsweise also die Auswahl geeigneter Messdaten und/oder Grenzwerte hierfür, verbessert, insbesondere vereinfacht und/oder rascher, präziser und/oder zuverlässiger durchgeführt und/oder das Ereigniskriterium selber, insbesondere die Auswahl und/oder Verknüpfung von Daten und/oder Grenzwerte hierfür, optimiert werden.

In einer Ausführung umfasst das Verfahren die Schritte:
- vollständig oder teilweise automatisiertes Bereitstellen einer oder mehrerer zweiter Sequenzen von (jeweils) aufeinanderfolgenden Abszissenpunkten zugeordneten zweiten Ordinatendaten auf Basis von Trainingsdaten; und
- vollständig oder teilweise automatisiertes Bestimmen des ersten Ereigniskriteriums (auch) auf Basis der zweiten Sequenz(en).

In einer Ausführung sind zweite Ordinatendaten denselben (ersten) Abszissenpunkten zugeordnet wie die ersten Ordinatendaten, was insbesondere die gemeinsame Behandlung der ersten und zweiten Sequenz(en) vereinfacht. Andernfalls werden in einer Ausführung der erste Ereignispunkt und die (zweiten) Abszissenpunkte, denen die zweiten Ordinatendaten zugeordnet sind, auf eine gemeinsame Basis überführt, beispielsweise der erste Ereignispunkt auf die Abszissenpunkte transformiert oder umgekehrt.

In einer Ausführung werden die bzw. eine oder mehrere zweite Sequenzen von (zweiten) Ordinatendaten auf Basis derselben Trainingsdaten bereitgestellt wie die erste Sequenz von ersten Ordinatendaten. So können beispielsweise Trainingsdaten eine Zeitreihe von Positionen, erste Ordinatendaten diese Positionen oder eine Teilmenge dieser Positionen und zweite Ordinatendaten erste und/oder höhere Ableitungen dieser Positionen nach den Abszissenpunkten, insbesondere also der Zeit, einem Bahnparameter oder dergleichen umfassen, insbesondere sein.

Zusätzlich oder alternativ werden in einer Ausführung die bzw. eine oder mehrere zweite Sequenzen von (zweiten) Ordinatendaten auf Basis anderer Trainingsdaten bereitgestellt als die erste Sequenz von ersten Ordinatendaten.

So können beispielsweise (erste) Trainingsdaten, auf deren Basis die ersten Ordinatendaten bereitgestellt werden, eine Zeitreihe von Positionen, erste Ordinatendaten diese Positionen, eine Teilmenge dieser Positionen und/oder erste und/oder höhere Ableitung dieser Positionen nach den Abszissenpunkten, insbesondere also der Zeit, einem Bahnparameter oder dergleichen umfassen, insbesondere sein, und andere (zweite) Trainingsdaten, auf deren Basis zweite Ordinatendaten einer zweiten Sequenz bereitgestellt werden, eine Zeitreihe von Kräften und zweite Ordinatendaten diese Kräfte, eine Teilmenge dieser Kräfte und/oder oder erste und/oder höhere Ableitung dieser Kräfte nach den Abszissenpunkten, insbesondere also der Zeit, einem Bahnparameter oder dergleichen umfassen, insbesondere sein.

Zusätzlich oder alternativ können in einer Ausführung (erste) Trainingsdaten, auf deren Basis die ersten Ordinatendaten bereitgestellt werden, eine (erste) Zeitreihe von Positionen während eines (ersten) Trainingsbetriebs und erste Ordinatendaten diese Positionen, eine Teilmenge dieser Positionen und/oder erste und/oder höhere Ableitung dieser Positionen nach den Abszissenpunkten, insbesondere also der Zeit, einem Bahnparameter oder dergleichen umfassen, insbesondere sein, und andere (zweite) Trainingsdaten, auf deren Basis zweite Ordinatendaten einer zweiten Sequenz bereitgestellt werden, eine (zweite) Zeitreihe der (gleichartigen) Positionen während eines (zweiten) Trainingsbetriebs unter geänderten Bedingungen oder eine gegenüber der einen (ersten) Zeitreihe modifizierten, beispielsweise simuliert verrauschten oder systematisch veränderten (zweiten) Zeitreihe, wobei die zweiten Ordinatendaten dann analog diese Positionen, eine (gleichartige) Teilmenge dieser Positionen bzw. erste und/oder höhere Ableitung dieser Positionen nach den Abszissenpunkten, insbesondere also der Zeit, einem Bahnparameter oder dergleichen umfassen, insbesondere sein, können.

Durch das Bestimmen des ersten Ereigniskriteriums (auch) auf Basis der zweiten Sequenz(en) kann in einer Ausführung die Mächtigkeit der Menge möglicher erster Ereigniskriterien vergrößert und so dieses Ereigniskriterium selber, insbesondere die Auswahl und/oder Verknüpfung von Daten und/oder Grenzwerte hierfür, weiter optimiert werden. Zusätzlich oder alternativ kann durch das Bestimmen des ersten Ereigniskriteriums (auch) auf Basis der zweiten Sequenz(en) in einer Ausführung die Robustheit des Ereigniskriteriums verbessert werden.

In einer Ausführung umfasst das Verfahren die Schritte:
- vollständig oder teilweise automatisiertes Identifizieren eines oder mehrerer zweiter Ereignispunkte innerhalb der aufeinanderfolgenden ersten Abszissenpunkte der ersten Sequenz; und
- vollständig oder teilweise automatisiertes Bestimmen des ersten Ereigniskriteriums und/oder eines oder mehrerer zweiter Ereigniskriterien auf Basis der ersten Sequenz und des bzw. der zweiten Ereignispunkte.

Durch das Bestimmen des ersten Ereigniskriteriums (auch) auf Basis wenigstens eines zweiten Ereignispunktes innerhalb der aufeinanderfolgenden ersten Abszissenpunkte der ersten Sequenz kann in einer Ausführung ein wiederholtes Auftreten des gleichen Ereignisses innerhalb der ersten Sequenz ausgenutzt werden, um dessen Definition und insbesondere Parametrierung weiter zu verbessern, insbesondere zu vereinfachen und/oder rascher, präziser und/oder zuverlässiger durchzuführen, und/oder das Ereigniskriterium selber, insbesondere die Auswahl und/oder Verknüpfung von Daten und/oder Grenzwerte hierfür, weiter zu optimieren.

Durch das Bestimmen wenigstens eines zweiten, von dem ersten Ereigniskriterium verschiedenen, Ereigniskriteriums auf Basis der ersten Sequenz und des bzw. der zweiten Ereignispunkte innerhalb der aufeinanderfolgenden ersten Abszissenpunkte der ersten Sequenz können in einer Ausführung unterschiedliche Ereignisse innerhalb der ersten Sequenz definiert und insbesondere parametriert und somit insbesondere die Mächtigkeit der Menge möglicher Ereigniskriterien vergrößert werden.

In einer Ausführung umfasst das Bereitstellen einer (ersten oder zweiten) Sequenz von aufeinanderfolgenden (ersten bzw. zweiten) Abszissenpunkten zugeordneten (ersten bzw. zweiten) Ordinatendaten auf Basis von (ersten bzw. zweiten) Trainingsdaten ein vollständig oder teilweise automatisiertes Erfassen, insbesondere Messen, dieser Trainingsdaten mittels der Erfassungsmittelanordnung während eines Betriebs, insbesondere Trainingsbetriebs, der Automatisierungsanordnung, insbesondere der Roboteranordnung.

Hierdurch können in einer Ausführung Ereigniskriterien vorteilhaft auf Basis realer (Mess)Daten bestimmt und so deren Praxistauglichkeit verbessert werden.

Zusätzlich oder alternativ umfasst in einer Ausführung das Bereitstellen einer (ersten oder zweiten) Sequenz von aufeinanderfolgenden (ersten bzw. zweiten) Abszissenpunkten zugeordneten (ersten bzw. zweiten) Ordinatendaten auf Basis von (ersten bzw. zweiten) Trainingsdaten ein vollständig oder teilweise automatisiertes Simulieren dieser Trainingsdaten.

Hierdurch können in einer Ausführung Ereigniskriterien vorteilhaft auf variierte Daten gestützt und so deren Praxistauglichkeit verbessert werden.

In einer Weiterbildung umfasst das Bereitstellen einer ersten und einer zweiten Sequenz von aufeinanderfolgenden Abszissenpunkten zugeordneten (ersten bzw. zweiten) Ordinatendaten ein vollständig oder teilweise automatisiertes Erfassen, insbesondere Messen, von ersten Trainingsdaten mittels der Erfassungsmittelanordnung während eines Betriebs, insbesondere Trainingsbetriebs, der Automatisierungsanordnung, insbesondere der Roboteranordnung, ein Bereitstellen einer ersten Sequenz von Ordinatendaten auf Basis dieser ersten Trainingsdaten, sowie ein vollständig oder teilweise automatisiertes Erfassen, insbesondere Messen, von weiteren (zweiten) Trainingsdaten mittels der Erfassungsmittelanordnung während eines wiederholten Betriebs, insbesondere Trainingsbetriebs, der Automatisierungsanordnung, insbesondere der Roboteranordnung, wobei dieser wiederholte Betrieb in einer Weiterbildung variiert wird, beispielsweise durch Variieren von Parametern der Automatisierungsanordnung wie kinematischen Daten, Masse und dergleichen, und/oder von Randbedingungen wie Umgebungssteifigkeiten oder dergleichen, und ein Bereitstellen einer zweiten Sequenz von Ordinatendaten auf Basis dieser (zweiten) Trainingsdaten.

Zusätzlich oder alternativ zu einem Erfassen unterschiedlicher Trainingsdaten während eines wiederholten Betriebs kann in einer Ausführung das Bereitstellen einer ersten und einer zweiten Sequenz ein vollständig oder teilweise automatisiertes Erfassen, insbesondere Messen, von ersten Trainingsdaten mittels der Erfassungsmittelanordnung während eines Betriebs, insbesondere Trainingsbetriebs, der Automatisierungsanordnung, insbesondere der Roboteranordnung oder ein Simulieren von ersten Trainingsdaten, ein Bereitstellen einer ersten Sequenz von Ordinatendaten auf Basis der ersten Trainingsdaten, sowie ein systematisches und/oder stochastisches Variieren, insbesondere unterschiedliches Samplen, Überlagern von Rauschen, Verändern von Frequenzen und/oder Amplituden oder dergleichen, der ersten Trainingsdaten und ein Bereitstellen einer zweiten Sequenz von Ordinatendaten auf Basis dieser variierten Trainingsdaten und/oder durch systematisches und/oder stochastisches Variieren, insbesondere Überlagern von Rauschen, Verändern von Frequenzen und/oder Amplituden oder dergleichen, der ersten Sequenz umfassen.

Zusätzlich oder alternativ kann in einer Ausführung das Bereitstellen einer ersten und einer zweiten Sequenz ein vollständig oder teilweise automatisiertes (erstes) Simulieren von ersten Trainingsdaten, ein Bereitstellen einer ersten Sequenz von Ordinatendaten auf Basis der ersten Trainingsdaten, sowie ein vollständig oder teilweise automatisiertes (zweites) Simulieren von weiteren (zweiten) Trainingsdaten und ein Bereitstellen einer zweiten Sequenz von Ordinatendaten auf Basis der zweiten Trainingsdaten umfassen, wobei dieses zweite Simulieren in einer Weiterbildung variiert wird, beispielsweise durch Variieren von (Modell- bzw. Simulations)Parametern der Automatisierungsanordnung wie kinematischen Daten, Masse und dergleichen, und/oder von (Modell- bzw. Simulations)Randbedingungen wie Umgebungssteifigkeiten oder dergleichen.

Zusätzlich oder alternativ umfasst in einer Ausführung das Bereitstellen einer (ersten oder zweiten) Sequenz von aufeinanderfolgenden (ersten bzw. zweiten) Abszissenpunkten zugeordneten (ersten bzw. zweiten) Ordinatendaten auf Basis von (ersten bzw. zweiten) Trainingsdaten ein vollständig oder teilweise automatisiertes Abspeichern, insbesondere in einen Speicher, Laden, insbesondere aus einem Speicher, und/oder Verarbeiten, insbesondere Filtern, Verstärken, ein- oder mehrfaches Differenzieren und/oder Integrieren, insbesondere nach bzw. über den Abszissenpunkten, insbesondere also der Zeit, einem Bahnparameter oder dergleichen, der, insbesondere simulierten und/oder mittels der Erfassungsmittelanordnung während des Betriebs der Automatisierungsanordnung erfassten, Trainingsdaten.

Durch das Speichern bzw. Laden können die Trainingsdaten in einer Ausführung offline bereitgestellt werden. Durch ein Filtern kann in einer Ausführung Messrauschen oder dergleichen reduziert werden. Zusätzlich oder alternativ können gefilterte Trainingsdaten in einer Ausführung vorteilhafte Ordinatendaten darstellen. Insbesondere hierzu kann der Filter ein(en) Gaußscher Filter, ein(en), insbesondere globaler oder gleitender, Durchschnitt, ein(en) Median oder dergleichen umfassen, insbesondere sein. Durch ein Verstärken können in einer Ausführung Messdaten vorteilhaft aufbereitet werden. Durch ein Differenzieren bzw. Integrieren können in einer Ausführung vorteilhafte Ordinatendaten zur Verfügung gestellt und insbesondere Änderungen im Verhalten der Trainingsdaten vorteilhaft detektiert werden.

In einer Ausführung umfasst das Identifizieren eines (ersten oder zweiten) Ereignispunktes innerhalb der (ersten bzw. zweiten) Abszissenpunkte einer (ersten bzw. zweiten) Sequenz ein vollständig oder teilweise automatisiertes Erfassen einer Benutzereingabe, insbesondere über eine hierzu eingerichtete Schnittstelle, wobei in einer Weiterbildung der Ereignispunkt vollständig oder teilweise automatisiert auf Basis dieser Benutzereingabe identifiziert wird.

Hierdurch kann in einer Ausführung ein Benutzer gewünschte Ereignisse vorgeben, für die dann vollständig oder teilweise automatisiert auf Basis der Ordinatendaten ein entsprechendes Ereigniskriterium bestimmt wird.

In einer Weiterbildung kann die Benutzereingabe während eines Erfassens der Trainingsdaten mittels der Erfassungsmittelanordnung während eines Betriebs der Automatisierungsanordnung, insbesondere der Roboteranordnung, erfolgen bzw. erfasst werden. So kann beispielsweise der Benutzer während eines Betriebs bei dem zu definierenden Ereignis einen Knopf, Taster, Softwareschalter oder dergleichen betätigen und der Abszissenpunkt, zu dem die Betätigung erfasst wurde, oder ein hiervon abhängiger, beispielsweise um eine durchschnittliche Reaktionszeit vorverlagerter, Abszissenpunkt als Ereignispunkt identifiziert werden.

In einer anderen Weiterbildung werden zunächst Trainingsdaten mittels der Erfassungsmittelanordnung während eines Betriebs der Automatisierungsanordnung, insbesondere der Roboteranordnung, vollständig oder teilweise erfasst und anschließender dieser Betrieb oder eine, insbesondere visuelle, Aufzeichnung hiervon mit, insbesondere variabel, insbesondere vom Benutzer einstellbar, reduzierter Geschwindigkeit und/oder, insbesondere variablen, insbesondere vom Benutzer einstellbaren, Pausen wiederholt, wobei während diesem Wiederholen die Benutzereingabe erfolgt bzw. erfasst wird.

Hierdurch kann in einer Ausführung der Benutzer den Ereignispunkt, insbesondere auch bei schnellem Trainingsbetrieb, präzise vorgeben.

Zusätzlich oder alternativ umfasst in einer Ausführung das Identifizieren eines (ersten oder zweiten) Ereignispunktes innerhalb der (ersten bzw. zweiten) Abszissenpunkte einer (ersten bzw. zweiten) Sequenz ein vollständig oder teilweise automatisiertes Erfassen eines Ereignissignals hierfür durch die Erfassungsmittelanordnung, insbesondere während eines Erfassen der Trainingsdaten mittels der Erfassungsmittelanordnung während eines Betriebs der Automatisierungsanordnung, insbesondere der Roboteranordnung.

Soll beispielsweise ein Betätigen eines Schalters durch die Roboteranordnung als Ereignis definiert werden, kann derjenige Abszissenpunkt als Ereignispunkt identifiziert werden, zu dem der Schalter ein (Ereignis)Signal ausgibt.

Gleichermaßen kann die Erfassungsmittelanordnung beispielsweise einen Kontakt visuell über eine Kamera, über eine, insbesondere laser- oder ultraschallgestützte Abstandsmessung, oder auditiv über ein Kontaktgeräusch erfassen und (daraufhin) ein entsprechendes (Ereignis)Signal ausgeben, und derjenige Abszissenpunkt als Ereignispunkt des Kontakts identifiziert werden, zu dem dieses (Ereignis)Signal ausgegeben wird.

In einer Ausführung umfasst das Bestimmen eines (ersten oder zweiten) Ereigniskriteriums auf Basis wenigstens einer Sequenz, insbesondere der ersten Sequenz und/oder einer oder mehrerer zweiter Sequenzen, und wenigstens eines (ersten bzw. zweiten) Ereignispunktes ein vollständig oder teilweise automatisiertes Variieren von einem oder mehreren Kriterien, insbesondere von einem oder mehreren Grenzwerten, für Ordinatendaten dieser Sequenz.

In einem einfachen Beispiel kann etwa ein Geschwindigkeitsgrenzwert solange variiert werden, bis hierdurch ein Kontakt präzise detektiert werden kann.

Zusätzlich oder alternativ umfasst in einer Ausführung das Bestimmen eines (ersten oder zweiten) Ereigniskriteriums auf Basis wenigstens einer Sequenz, insbesondere der ersten Sequenz und/oder einer oder mehrerer zweiter Sequenzen, und wenigstens eines (ersten bzw. zweiten) Ereignispunktes ein vollständig oder teilweise automatisiertes Variieren einer Auswahl aus wenigstens zwei Sequenzen.

In einem einfachen Beispiel kann etwa zwischen einer Auswertung einer Position, Geschwindigkeit und Kraft solange variiert werden, bis hierdurch ein Kontakt präzise detektiert werden kann.

Zusätzlich oder alternativ umfasst in einer Ausführung das Bestimmen eines (ersten oder zweiten) Ereigniskriteriums auf Basis wenigstens einer Sequenz, insbesondere der ersten Sequenz und/oder einer oder mehrerer zweiter Sequenzen, und wenigstens eines (ersten bzw. zweiten) Ereignispunktes ein vollständig oder teilweise automatisiertes Variieren einer, insbesondere logischen und/oder zeitlichen, Verknüpfung von wenigstens einem Kriterium, insbesondere Grenzwert, für Ordinatendaten einer Sequenz und wenigstens einem Kriterium, insbesondere Grenzwert, für Ordinatendaten einer anderen Sequenz.

In einem einfachen Beispiel kann etwa zwischen einer Verknüpfung eines Positions- und eines Geschwindigkeitsgrenzwertes, eines Positions- und eines Kraftgrenzwertes, und eines Geschwindigkeits- und eines Kraftgrenzwertes solange variiert werden, bis hierdurch ein Kontakt präzise detektiert werden kann.

Allgemein kann·ein Ereigniskriterium insbesondere mit an sich bekannten Methoden der sogenannten "complex event detection" bzw. des "complex event processing" ("CEP") bestimmt werden, wobei ein Bestimmen eines Ereigniskriteriums in einer Ausführung insbesondere dessen Festlegung, insbesondere Auswahl oder Generierung, und/oder Parametrierung umfasst, insbesondere ist.

In einer Ausführung kann ein Benutzer das Variieren des Kriteriums, der Auswahl und/oder Verknüpfung beeinflussen, insbesondere bestimmte Kriterien, Auswahlen und/oder Verknüpfungen priorisieren, sperren bzw. ausschließen oder dergleichen.

Insbesondere können in einer Ausführung zunächst anhand von Trainingsdaten für einen konkreten Anwendungsfall ein oder mehrere zur Detektion eines Ereignisses vorteilhafte Sequenzen bestimmt werden, beispielsweise zur Detektion einer Betätigung eines Schalters geeignete Beschleunigungs- und/oder Kraftzeitreihen. Soll anschließend ein artgleiches Ereignis in einem anderen Anwendungsfall detektiert werden, beispielsweise die Betätigung eines anderen Schalters mit steiferer Kennlinie oder dergleichen, so kann der Benutzer diese bestimmten vorteilhaften Sequenzen vorgeben bzw. die Variation der Auswahl auf diese einschränken, so dass anschließend nur noch der für den anderen Anwendungsfall vorteilhafte andere Schwellwert der Beschleunigung bzw. Kraft bestimmt werden muss.

Insbesondere hierzu umfasst in einer Ausführung ein hier beschriebenes Variieren ein vollständig oder teilweise automatisiertes Erfassen einer Benutzervorgabe hierfür, wobei das Kriterium, die Auswahl und/oder Verknüpfung auf Basis dieser Benutzervorgabe variiert werden.

In einer Ausführung ist das bzw. wenigstens eines, vorzugsweise alle, Ereigniskriterien, die bestimmt werden, echtzeitfähig, insbesondere kann ihre Echtzeitfähigkeit beim Variieren des Kriteriums, der Auswahl und/oder Verknüpfung vollständig oder teilweise automatisiert berücksichtigt werden.

So werden in einem einfachen Beispiel Trainingsdaten nur solange zu (weiteren) Ordinatendaten bzw. Sequenzen differenziert, solange diese (numerische) Differenzierung noch in Echtzeit während des Betriebs der Automatisierungsanordnung, insbesondere der Roboteranordnung, durchgeführt werden kann.

In einer Ausführung werden das bzw. die Ereigniskriterien, insbesondere vollständig oder teilweise automatisiert, beim bzw. zum Generieren und/oder Modifizieren eines Programms zum Steuern der Automatisierungsanordnung, insbesondere der Roboteranordnung, verwendet.

In einem einfachen Beispiel kann ein Benutzer einen Grenzwert in einem Robotersteuerprogramm verwenden, der wie hier beschrieben auf Basis von einer Sequenz und einem Ereignispunkt automatisiert bestimmt worden ist.

Hierdurch kann Generieren und/oder Modifizieren von Programmen verbessert, insbesondere vereinfacht und/oder rascher, präziser und/oder zuverlässiger durchgeführt werden.

In einer Ausführung wird die Automatisierungsanordnung, insbesondere die Roboteranordnung, auf Basis eines solchen (Roboter(steuer))Programms gesteuert. Entsprechend umfasst in einer Ausführung das Verfahren die Schritte:
- vollständig oder teilweise automatisiertes Erfassen von aktuellen Daten mittels der Erfassungsmittelanordnung während eines Betriebs der Automatisierungsanordnung, insbesondere der Roboteranordnung; und
- vollständig oder teilweise automatisiertes Steuern der Automatisierungsanordnung, insbesondere der Roboteranordnung, auf Basis der aktuellen Daten und eines oder mehrerer Ereigniskriterien, die wie hier beschrieben bestimmt worden sind, insbesondere Auslösen wenigstens einer Aktion der Automatisierungsanordnung, insbesondere der Roboteranordnung, infolge eines Erfüllens wenigstens eines Ereigniskriteriums durch die aktuellen Daten.

Nach einer Ausführung der vorliegenden Erfindung ist ein System zur Durchführung eines hier beschriebenen Verfahrens eingerichtet und/oder weist auf:
- Mittel zum wenigstens teilweise automatisierten Bereitstellen einer ersten Sequenz von aufeinanderfolgenden ersten Abszissenpunkten zugeordneten ersten Ordinatendaten auf Basis von ersten Trainingsdaten;
- Mittel zum wenigstens teilweise automatisierten Identifizieren eines ersten Ereignispunktes innerhalb der ersten Abszissenpunkte der ersten Sequenz; und
- Mittel zum wenigstens teilweise automatisierten Bestimmen eines ersten Ereigniskriteriums auf Basis der ersten Sequenz und des ersten Ereignispunktes.

In einer Ausführung weist das System auf:
- Mittel zum wenigstens teilweise automatisierten Bereitstellen wenigstens einer zweiten Sequenz von aufeinanderfolgenden Abszissenpunkten zugeordneten zweiten Ordinatendaten auf Basis von Trainingsdaten; und
- Mittel zum wenigstens teilweise automatisierten Bestimmen des ersten Ereigniskriteriums auf Basis der zweiten Sequenz.

In einer Ausführung weist das System auf:
- Mittel zum wenigstens teilweise automatisierten Identifizieren wenigstens eines zweiten Ereignispunktes innerhalb der aufeinanderfolgenden ersten Abszissenpunkte der ersten Sequenz; und
- Mittel zum wenigstens teilweise automatisierten Bestimmen des ersten und/oder wenigstens eines zweiten Ereigniskriteriums auf Basis der ersten Sequenz und des zweiten Ereignispunktes.

In einer Ausführung weist das System auf:
- Mittel zum wenigstens teilweise automatisierten Erfassen der Trainingsdaten mittels der Erfassungsmittelanordnung während eines Betriebs der Automatisierungsanordnung, insbesondere der Roboteranordnung; und/oder
- Mittel zum wenigstens teilweise automatisierten Simulieren der Trainingsdaten und/oder;
- Mittel zum wenigstens teilweise automatisierten Abspeichern, Laden und/oder Verarbeiten, insbesondere Filtern, Verstärken, ein- oder mehrfaches Differenzieren und/oder Integrieren der, insbesondere simulierten und/oder mittels der Erfassungsmittelanordnung während des Betriebs der Automatisierungsanordnung erfassten, Trainingsdaten;
zum Bereitstellen einer Sequenz von aufeinanderfolgenden Abszissenpunkten zugeordneten Ordinatendaten auf Basis von Trainingsdaten.

In einer Ausführung weist das System auf: Mittel zum wenigstens teilweise automatisierten Erfassen einer Benutzereingabe und/oder eines Ereignissignals durch die Erfassungsmittelanordnung, insbesondere während eines Erfassens der Trainingsdaten mittels der Erfassungsmittelanordnung während eines Betriebs der Automatisierungsanordnung, insbesondere der Roboteranordnung, zum Identifizieren eines Ereignispunktes innerhalb der Abszissenpunkte einer Sequenz.

In einer Ausführung weist das System auf:
- Mittel zum wenigstens teilweise automatisierten Erfassen der Trainingsdaten mittels der Erfassungsmittelanordnung während eines Betriebs der Automatisierungsanordnung, insbesondere der Roboteranordnung;
- Mittel zum wenigstens teilweise automatisierten Wiederholen dieses Betriebs oder einer Aufzeichnung hiervor mit, insbesondere variabel, reduzierter Geschwindigkeit und/oder, insbesondere variablen, Pausen; und
- Mittel zum wenigstens teilweise automatisierten Erfassen der Benutzereingabe während diesem Wiederholen.

In einer Ausführung weist das System auf: Mittel zum wenigstens teilweise automatisierten Variieren von wenigstens einem Kriterium, insbesondere Grenzwert, für Ordinatendaten einer Sequenz zum Bestimmen eines Ereigniskriteriums auf Basis dieser Sequenz und wenigstens eines Ereignispunktes.

In einer Ausführung weist das System auf: Mittel zum wenigstens teilweise automatisierten Variieren einer Auswahl aus wenigstens zwei Sequenzen und/oder einer, insbesondere logischen und/oder zeitlichen, Verknüpfung von wenigstens einem Kriterium, insbesondere Grenzwert, für Ordinatendaten einer Sequenz und wenigstens einem Kriterium, insbesondere Grenzwert, für Ordinatendaten einer anderen Sequenz zum Bestimmen eines Ereigniskriteriums auf Basis wenigstens einer Sequenz und wenigstens eines Ereignispunktes.

In einer Ausführung weist das System auf: Mittel zum wenigstens teilweise automatisierten Erfassen einer Benutzervorgabe für das Variieren.

In einer Ausführung weist das System auf:
- Mittel zum wenigstens teilweise automatisierten Erfassen von aktuellen Daten mittels der Erfassungsmittelanordnung während eines Betriebs der Automatisierungsanordnung, insbesondere der Roboteranordnung; und
- Mittel zum wenigstens teilweise automatisierten Steuern der Automatisierungsanordnung, insbesondere der Roboteranordnung, auf Basis der aktuellen Daten und wenigstens eines Ereigniskriteriums, insbesondere Auslösen wenigstens einer Aktion der Automatisierungsanordnung, insbesondere der Roboteranordnung, infolge eines Erfüllens wenigstens eines Ereigniskriteriums durch die aktuellen Daten.

In einer Ausführung weist das System auf: Mittel zum wenigstens teilweise automatisierten Generieren und/oder Modifizieren eines Programms zum Steuern der Automatisierungsanordnung, insbesondere der Roboteranordnung, unter Verwendung wenigstens eines Ereigniskriteriums.

In einer Ausführung weist das System auf: Mittel zum wenigstens teilweise automatisierten Erfassen von Kräften der Roboteranordnung, insbesondere in Gelenken von wenigstens einem Roboter der Roboteranordnung, durch wenigstens ein Erfassungsmittel der Erfassungsmittelanordnung.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann.

In einer Ausführung werden ein oder mehrere, insbesondere alle, Schritte des Verfahrens vollständig oder teilweise automatisiert durchgeführt, insbesondere durch das System bzw. ihr(e) Mittel. Unter (wenigstens) teilweise automatisiert wird vorliegend insbesondere computer- bzw. rechnergestützt verstanden, unter vollständig automatisiert entsprechend insbesondere vollständig durch einen Computer bzw. Rechner.

Weitere Vorteile und Merkmale ergeben sich aus den Unteransprüchen und den Ausführungsbeispielen. Hierzu zeigt, teilweise schematisiert:
- Fig. 1:: eine Anordnung mit einer Automatisierungsanordnung, die eine Roboteranordnung mit einem Roboter und eine Erfassungsmittelanordnung mit Erfassungsmitteln aufweist, und einem System zum Steuern der Automatisierungsanordnung nach einer Ausführung der vorliegenden Erfindung;
- Fig. 2:: verschiedene Sequenzen von bereitgestellten Ordinatendaten; und
- Fig. 3:: ein Verfahren zum Steuern der Automatisierungsanordnung nach einer Ausführung der vorliegenden Erfindung.

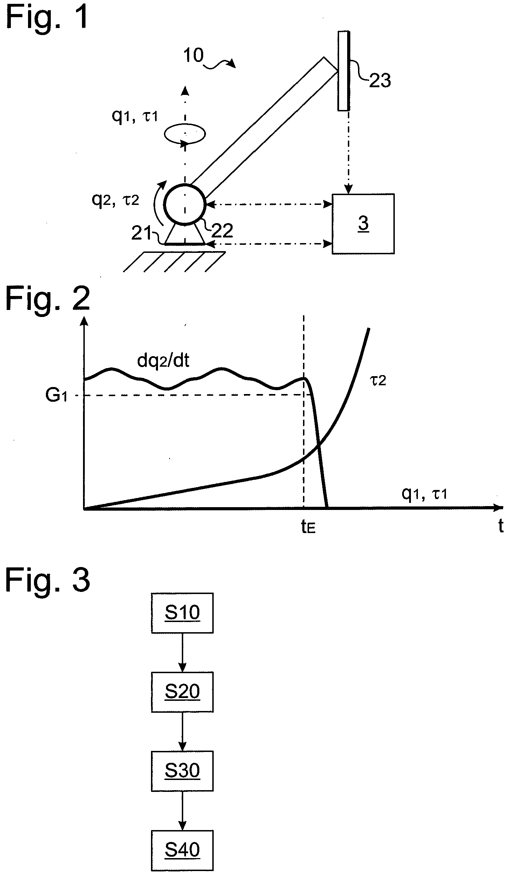

Fig. 1 zeigt eine Anordnung mit einer Automatisierungsanordnung, die eine Roboteranordnung mit einem Roboter 10 und eine Erfassungsmittelanordnung mit Erfassungsmitteln 21-23 aufweist, und einem System 3 zum Steuern der Automatisierungsanordnung nach einer Ausführung der vorliegenden Erfindung.

Zur besseren Übersicht weist der Roboter 10 im entsprechend stark vereinfachten Ausführungsbeispiel nur ein erstes Drehgelenk, das gegen die Umgebung um eine vertikale Achse um den Drehwinkel q₁ verstellbar ist, und einen Arm auf, der gegen das erste Drehgelenk um eine horizontale Achse um den Drehwinkel q₂ verstellbar ist. Positions- und Drehmomentsensoren 21, 22 in diesen Gelenken liefern entsprechende Positionsdaten q₁, q₂ und Kraft- bzw. Drehmomentdaten τ₁, τ₂ an das System 3.

Zudem weist die Erfassungsmittelanordnung im Ausführungsbeispiel zum besseren Verständnis einen Kraftsensor oder Druckschalter 23 auf, der bei Betätigung ein Ereignissignal an das System 3 liefert.

In Fig. 2 sind, wiederum stark vereinfacht, die Positionsdaten q₁, die erste Zeitableitung dq₂/dt der Positionsdaten q₂ und die Kraft- bzw. Drehmomentdaten τ₁, τ₂ über der Zeit t angedeutet, wenn der Roboter 10 durch Herabschwenken seines Arms den Kraftsensor bzw. Druckschalter 23 betätigt. Man erkennt, dass sich dieses Ereignis in den Daten q₁, τ₁ des ersten Gelenks nicht wiederspiegelt, während im zweiten Gelenk die Geschwindigkeit dq₂/dt stark ab- und das Drehmoment τ₂ stärker als zuvor zunimmt.

Fig. 3 zeigt ein Verfahren zum Steuern der Automatisierungsanordnung nach einer Ausführung der vorliegenden Erfindung, das das System 3 ausführt. Diesbezüglich sei darauf hingewiesen, dass das System 3 insbesondere auch zweiteilig ausgebildet sein und ein Teil(System) nach einer Ausführung der vorliegenden Erfindung zum Bestimmen wenigstens eines Ereigniskriteriums und Generieren und/oder Modifizieren eines Programms zum Steuern der Automatisierungsanordnung, insbesondere der Roboteranordnung, unter Verwendung dieses Ereigniskriteriums und ein weiteres, insbesondere hiervon getrenntes, Teil(System) zum Abarbeiten des Programms bzw. Steuern der Automatisierungs-, insbesondere der Roboteranordnung aufweisen kann.

In einem Schritt S10 werden in einem Trainingsbetrieb der Kraftsensor bzw. Druckschalter 23 durch Herabschwenken des Roboterarms betätigt und dabei Positionsdaten q₁, q₂ und Kraft- bzw. Drehmomentdaten τ₁, τ₂ durch die Sensoren 21, 22 als Trainingsdaten erfasst.

Auf Basis dieser Trainingsdaten stellt das System 3 in Schritt S10 durch Filtern und/oder Verstärken Ordinatendaten in Form von Zeitreihen q₁(t), q₂(t), τ₁(t), τ₂(t) und durch Differenzieren weitere Ordinatendaten in Form von weiteren Zeitreihen dq₁/dt, dq₂/dt bereit.

In einem Schritt S20 wird eine visuelle Aufzeichnung dieses Betätigens mit benutzereingestellt verlangsamter Geschwindigkeit wiederholt, so dass ein Benutzer beim Betrachten der visuelle Aufzeichnung, beispielsweise durch einen Sprachbefehl, Tastendruck oder dergleichen, präzise den Moment des Kontakts mit dem Schalter feststellen und diesen als Ereignis(zeit)punkt t_{E} eingeben kann, wie er in Fig. 2 angedeutet ist. Gleichermaßen kann beispielsweise auch ein Ereignissignal von dem Kraftsensor bzw. Druckschalter 23 genutzt werden, um den Ereignis(zeit)punkt t_{E} vollständig automatisiert zu identifizieren.

In einem Schritt S30 variiert das System 3 nun eine Auswahl aus den zur Verfügung stehenden Ordinatendaten q₁(t), q₂(t), τ₁(t), τ₂(t), dq₁/dt, dq₂/dt, verschiedene Schwellwerte für diese Ordinatendaten, beispielsweise dq₂/dt < G₁, dq₂/dt < G₂ etc., sowie unterschiedliche Verknüpfungen dieser Schwellwerte, beispielsweise dq₂/dt < G₁ UND τ₂ > G₃ etc., und bestimmt dasjenige Ereigniskriterium, das den Ereignis(zeit)punkt t_{E} am besten detektiert.

Im (zur Verdeutlichung stark vereinfachten) Ausführungsbeispiel weisen beispielsweise die Ordinatendaten q₁(t), τ₁(t) und dq₁/dt keine Korrelation mit dem Ereignis(zeit)punkt t_{E} auf, die Ordinatendaten τ₂(t) eine mittlere Korrelation und die Ordinatendaten dq₂/dt eine große Korrelation, wobei das Unterschreiten eines Schwellwertes G₁ den Ereignis(zeit)punkt t_{E} am besten detektiert. Es sei betont, dass dieses Ausführungsbeispiel zum besseren Verständnis stark vereinfacht ist und der Kontakt beispielsweise (noch) besser auf Basis eines betragsmäßigen Überschreitens eines Beschleunigungsgrenzwertes detektierbar wäre, wobei jedoch zur besseren Übersichtlichkeit im Ausführungsbeispiel keine Ordinatendaten |d²q₂/dt²| berücksichtigt sind.

Entsprechend bestimmt das System 3 in Schritt S30 als Ereigniskriterium zur Detektion einer Betätigung des Kraftsensors bzw. Druckschalters 23 durch den Roboter 10 ein Unterschreiten des Schwellwertes G₁ durch die Geschwindigkeit dq₂/dt im zweiten Drehgelenk.

Anschließend wird dieses Ereigniskriterium in einem Schritt S40 in einem Programm für den Roboter 10 verwendet und der Roboter auf Basis dieses Programms gesteuert.

Soll ein Programm zum Betätigen eines steiferen Schalters erstellt werden, kann im Prinzip dasselbe Verfahren nochmals durchgeführt werden.

Dabei kann der Benutzer in Schritt S30 die zur Verfügung stehenden Ordinatendaten bereits auf die Ordinatendaten dq₂/dt einschränken, da aus der vorherigen Anwendung bekannt ist, dass diese besonders geeignet zur Detektion einer Schalterbetätigung sind. Dann bestimmt das System in Schritt S30 nur noch den für den steiferen Schalter geeigneten neuen Schwellwert.

Aus dem (zur Verdeutlichung stark vereinfachten) Ausführungsbeispiel wird auch deutlich, dass in Schritt S10, beispielsweise durch Messen oder Simulation einer Betätigung steiferer Schalter, noch weitere Trainingsdaten zur Verfügung gestellt und in Schritt S30 dasjenige Ereigniskriterium bestimmt werden könnte, dass für diese unterschiedlichen Trainingsdaten insgesamt am geeignetsten ist, so dass vorteilhaft ein besonders robustes Ereigniskriterium bestimmt werden kann.

Zudem wird deutlich, dass der Benutzer in Fig. 2 auch weitere Ereignispunkte zur Detektion weiterer Ereignisse wie etwa einer Kollision des um die vertikale Achse drehenden Roboters 10 oder bei Messen einer mehrfachen Betätigung des Drucksensors bzw. Schalters 23 zur Detektion desselben Ereignisses eingeben könnte.

### Bezugszeichenliste

- 10: Roboter
- 21-23: Sensor (Erfassungsmittel)
- 3: System

## Patentansprüche

1. Verfahren zum Steuern einer Automatisierungsanordnung, die eine Roboteranordnung mit wenigstens einem Roboter (10) und eine Erfassungsmittelanordnung mit wenigstens einem Erfassungsmittel (21-23) aufweist, mit den wenigstens teilweise automatisierten Schritten:
- Bereitstellen (S10) einer ersten Sequenz von aufeinanderfolgenden ersten Abszissenpunkten (t) zugeordneten ersten Ordinatendaten (q₁, q₂, dq₂/dt, τ₁, τ₂) auf Basis von ersten Trainingsdaten (q₁, q₂, τ₁, τ₂);
- Identifizieren (S20) eines ersten Ereignispunktes (t_{E}) innerhalb der ersten Abszissenpunkte der ersten Sequenz; **dadurch gekennzeichnet, dass** das Verfahren weiterhin die folgenden Schritte umfasst:
- Bestimmen (S30) eines ersten Ereigniskriteriums auf Basis der ersten Sequenz und des ersten Ereignispunktes;
wobei diese ersten Trainingsdaten auf einem Erfassen von Daten während eines Betriebs, insbesondere Trainingsbetriebs, der Automatisierungsanordnung oder auf einem Simulieren basieren;
wobei dieses Bestimmen des Ereigniskriteriums auf Basis dieser Sequenz und dieses Ereignispunktes
- ein wenigstens teilweise automatisiertes Variieren einer Auswahl aus wenigstens zwei Sequenzen und/oder
- ein wenigstens teilweise automatisiertes Variieren einer, insbesondere logischen und/oder zeitlichen, Verknüpfung von wenigstens einem Kriterium, insbesondere Grenzwert, für Ordinatendaten einer Sequenz und wenigstens einem Kriterium, insbesondere Grenzwert, für Ordinatendaten einer anderen Sequenz
umfasst;
wobei dieses Bestimmen des Ereigniskriteriums dessen Festlegung, insbesondere Auswahl oder Generierung, und/oder Parametrierung umfasst; und
wobei das Verfahren den wenigstens teilweise automatisierten Schritt:
- Generieren und/oder Modifizieren (S40) eines Programms zum Steuern der Automatisierungsanordnung unter Verwendung des Ereigniskriteriums; oder
die wenigstens teilweise automatisierte Schritte aufweist:
- Erfassen (S40) von aktuellen Daten mittels der Erfassungsmittelanordnung während eines Betriebs der Automatisierungsanordnung, insbesondere der Roboteranordnung; und,
- Steuern (S40) der Automatisierungsanordnung, insbesondere der Roboteranordnung, auf Basis der aktuellen Daten und des Ereigniskriteriums, insbesondere Auslösen wenigstens einer Aktion der Automatisierungsanordnung, insbesondere der Roboteranordnung, infolge eines Erfüllens des Ereigniskriteriums durch die aktuellen Daten.

2. Verfahren nach Anspruch 1, mit den wenigstens teilweise automatisierten Schritten:
Bereitstellen (S10) wenigstens einer zweiten Sequenz von aufeinanderfolgenden Abszissenpunkten (t) zugeordneten zweiten Ordinatendaten (q₁, q₂, dq₂/dt, τ₁, τ₂) auf Basis von Trainingsdaten (q₁, q₂, τ₁, τ₂); und
Bestimmen (S30) des ersten Ereigniskriteriums auf Basis der zweiten Sequenz.

3. Verfahren nach einem der vorhergehenden Ansprüche, mit den wenigstens teilweise automatisierten Schritten:
Identifizieren (S20) wenigstens eines zweiten Ereignispunktes innerhalb der aufeinanderfolgenden ersten Abszissenpunkte der ersten Sequenz; und
Bestimmen (S30) des ersten und/oder wenigstens eines zweiten Ereigniskriteriums auf Basis der ersten Sequenz und des zweiten Ereignispunktes.

4. Verfahren nach einem der vorhergehenden Ansprüche, **dadurch gekennzeichnet, dass** das Bereitstellen einer Sequenz von aufeinanderfolgenden Abszissenpunkten zugeordneten Ordinatendaten auf Basis von Trainingsdaten ein wenigstens teilweise automatisiertes Erfassen der Trainingsdaten mittels der Erfassungsmittelanordnung während eines Betriebs der Automatisierungsanordnung, insbesondere der Roboteranordnung, oder ein wenigstens teilweise automatisiertes Simulieren der Trainingsdaten umfasst.

5. Verfahren nach einem der vorhergehenden Ansprüche, **dadurch gekennzeichnet, dass** das Bereitstellen einer Sequenz von aufeinanderfolgenden Abszissenpunkten zugeordneten Ordinatendaten auf Basis von Trainingsdaten ein wenigstens teilweise automatisiertes Abspeichern, Laden und/oder Verarbeiten, insbesondere Filtern, Verstärken, ein- oder mehrfaches Differenzieren und/oder Integrieren der, insbesondere simulierten und/oder mittels der Erfassungsmittelanordnung während des Betriebs der Automatisierungsanordnung erfassten, Trainingsdaten umfasst.

6. Verfahren nach einem der vorhergehenden Ansprüche, **dadurch gekennzeichnet, dass** das Identifizieren eines Ereignispunktes innerhalb der Abszissenpunkte einer Sequenz ein wenigstens teilweise automatisiertes Erfassen einer Benutzereingabe und/oder eines Ereignissignals hierfür durch die Erfassungsmittelanordnung, insbesondere während eines Erfassens der Trainingsdaten mittels der Erfassungsmittelanordnung während eines Betriebs der Automatisierungsanordnung, insbesondere der Roboteranordnung, umfasst.

7. Verfahren nach dem vorhergehenden Anspruch, mit den wenigstens teilweise automatisierten Schritten:
Erfassen (S10) der Trainingsdaten mittels der Erfassungsmittelanordnung während eines Betriebs der Automatisierungsanordnung, insbesondere der Roboteranordnung;
Wiederholen (S20) dieses Betriebs oder einer Aufzeichnung hiervon mit,
insbesondere variabel, reduzierter Geschwindigkeit und/oder, insbesondere variablen, Pausen; und
Erfassen (S20) der Benutzereingabe während diesem Wiederholen.

8. Verfahren nach einem der vorhergehenden Ansprüche, **dadurch gekennzeichnet, dass** das Bestimmen eines Ereigniskriteriums auf Basis wenigstens einer Sequenz und wenigstens eines Ereignispunktes ein wenigstens teilweise automatisiertes Variieren von wenigstens einem Kriterium, insbesondere Grenzwert, für Ordinatendaten dieser Sequenz umfasst.

9. Verfahren nach einem der vorhergehenden Ansprüche, **dadurch gekennzeichnet, dass** das Variieren ein wenigstens teilweise automatisiertes Erfassen einer Benutzervorgabe hierfür umfasst.

10. Verfahren nach einem der vorhergehenden Ansprüche, **dadurch gekennzeichnet, dass** wenigstens ein Ereigniskriterium echtzeitfähig ist.

11. Verfahren nach einem der vorhergehenden Ansprüche, **dadurch gekennzeichnet, dass** wenigstens ein Erfassungsmittel der Erfassungsmittelanordnung wenigstens teilweise automatisiert Kräfte der Roboteranordnung, insbesondere in Gelenken von wenigstens einem Roboter der Roboteranordnung, erfasst.

12. System, das das Verfahren nach einem der vorhergehenden Ansprüche durchzuführen eingerichtet ist.

13. Anordnung mit einer Automatisierungsanordnung, die eine Roboteranordnung mit wenigstens einem Roboter (10) und eine Erfassungsmittelanordnung mit wenigstens einem Erfassungsmittel (21-23) aufweist, und einem System nach Anspruch 12 zum Steuern dieser Automatisierungsanordnung.

14. Computerprogrammprodukt mit einem Programmcode, der auf einem von einem Computer lesbaren Medium gespeichert ist, zur Durchführung eines Verfahrens nach einem der vorhergehenden Ansprüche 1-11.

## Claims

1. A method of controlling an automatic processing arrangement which comprises a robot arrangement with at least one robot (10) and an acquisition means arrangement with at least one acquisition means (21 - 23), wherein the method comprises the following, at least partially automated, steps:
- providing (S10) a first sequence of first ordinate data (q₁, q₂, dq₂/dt, τ₁, τ₂) which are associated with successive first abscissa points (t) on the basis of first training data (q₁, q₂, τ₁, τ₂);
- identifying (S20) a first event point (t_{E}) within the first abscissa points of the first sequence; **characterised in that** the method further comprises the following steps:
- determining (S30) a first event criterion on the basis of the first sequence and the first event point;
wherein these first training data are based on an acquisition of data during an operation, in particular during a training operation, of the automatic processing arrangement, or are based on a simulation;
wherein said determining of the event criterion on the basis of said sequence and said event point comprises
- an at least partially automated varying of a selection from at least two sequences and/or
- an at least partially automated varying of a link, in particular a logical and/or a temporal link, between at least one criterion, in particular a limit value, for ordinate data of a sequence, and at least one criterion, in particular a limit value, for ordinate data of a different sequence;
wherein said determining of the event criterion comprises its specifying, in particular its selecting or generating, and/or parameterising; and
wherein the method comprises the following, at least partially automated, step:
- generating and/or modifying (S40) a program for controlling the automatic processing arrangement using the event criterion; or
wherein the method comprises the following, at least partially automated, steps:
- acquiring (S40) current data by means of the acquisition means arrangement during an operation of the automatic processing arrangement, in particular during an operation of the robot arrangement; and
- controlling (S40) the automatic processing arrangement, in particular the robot arrangement, on the basis of the current data and the event criterion, in particular triggering at least one action of the automatic processing arrangement, in particular of the robot arrangement, as a consequence of the event criterion being fulfilled by the current data.

2. The method according to claim 1, comprising the following, at least partially automated, steps:
providing (S10) at least a second sequence of second ordinate data (q₁, q₂, dq₂/dt, τ₁, τ₂) which are associated with successive abscissa points (t) on the basis of training data (q₁, q₂, τ₁, τ₂); and
determining (S30) the first event criterion on the basis of the second sequence.

3. The method according to any one of the preceding claims, comprising the following, at least partially automated, steps:
identifying (S20) at least a second event point within the successive first abscissa points of the first sequence; and
determining (S30) the first and/or at least a second event criterion on the basis of the first sequence and the second event point.

4. The method according to any one of the preceding claims, **characterised in that** the providing of a sequence of ordinate data which are associated with successive abscissa points on the basis of training data comprises an at least partially automated acquisition of the training data by means of the acquisition means arrangement during an operation of the automatic processing arrangement, in particular during an operation of the robot arrangement, or an at least partially automated simulating of the training data.

5. The method according to any one of the preceding claims, **characterised in that** the providing of a sequence of ordinate data which are associated with successive abscissa points on the basis of training data comprises an at least partially automated storing, loading and/or processing, in particular filtering, amplifying, differentiating once or several times and/or integrating, of the training data, in particular the simulated training data and/or the training data acquired by means of the acquisition means arrangement during the operation of the automatic processing arrangement.

6. The method according to any one of the preceding claims, **characterised in that** the identifying of an event point within the abscissa points of a sequence comprises an at least partially automated acquiring of a user input and/or of an event signal for this by the acquisition means arrangement, in particular during an acquisition of the training data by means of the acquisition means arrangement during an operation of the automatic processing arrangement, in particular during an operation of the robot arrangement.

7. The method according to the preceding claim, comprising the following, at least partially automated, steps:
acquiring (S10) the training data by means of the acquisition means arrangement during an operation of the automatic processing arrangement, in particular during an operation of the robot arrangement;
repeating (S20) this operation or a recording thereof at a reduced speed, in particular at a variable reduced speed, and/or with pauses, in particular with variable pauses; and
acquiring (S20) the user input during this repetition.

8. The method according to any one of the preceding claims, **characterised in that** the determining of an event criterion on the basis of at least one sequence and at least one event point comprises an at least partially automated varying of at least one criterion, in particular a limit value, for ordinate data of this sequence.

9. The method according to any one of the preceding claims, **characterised in that** the varying comprises an at least partially automated acquiring of a user specification for this.

10. The method according to any one of the preceding claims, **characterised in that** at least one event criterion is capable of real-time.

11. The method according to any one of the preceding claims, **characterised in that** at least one acquisition means of the acquisition means arrangement detects forces of the robot arrangement in an at least partially automated manner, in particular in joints of at least one robot of the robot arrangement.

12. A system which is arranged to carry out the method according to any one of the preceding claims.

13. An arrangement comprising an automatic processing arrangement which comprises a robot arrangement with at least one robot (10) and an acquisition means arrangement with at least one acquisition means (21 - 23), and a system according to claim 12 for controlling this automatic processing arrangement.

14. A computer program product with a program code which is stored on a computer-readable medium, for carrying out a method according to any one of the preceding claims 1 - 11.

## Revendications

1. Procédé de commande d'un ensemble d'automatisation, qui présente un ensemble robotisé avec au moins un robot (10) et un ensemble de moyens de détection avec au moins un moyen de détection (21-23), avec les étapes au moins en partie automatisées :
- de mise à disposition (S10) d'une première séquence de premières données d'ordonnées (q₁, q₂, dq₂/dt, τ₁, τ₂) associées à des premiers points d'abscisses (t) successifs sur la base de premières données d'apprentissage (q₁, q₂, τ₁, τ₂) ;
- d'identification (S20) d'un premier point d'événement (t_{E}) parmi les premiers points d'abscisses de la première séquence ; **caractérisé en ce que** le procédé comprend par ailleurs les étapes suivantes :
- la détermination (S30) d'un premier critère d'événement sur la base de la première séquence et du premier point d'événement ;
dans lequel lesdites premières données d'apprentissage sont basées sur une détection de données pendant un mode de fonctionnement, en particulier un mode d'apprentissage, l'ensemble d'automatisation ou sur une simulation ;
dans lequel ladite détermination du critère d'événement sur la base de ladite séquence et dudit point d'événement comprend
- une variation au moins en partie automatisée d'une sélection d'au moins deux séquences et/ou
- une variation au moins en partie automatisée d'une combinaison, en particulier logique et/ou temporelle, d'au moins un critère, en particulier d'une valeur de seuil, pour des données d'ordonnées d'une séquence et d'au moins un critère, en particulier d'une valeur de seuil, pour des données d'ordonnées d'une autre séquence
;
dans lequel ladite détermination du critère d'événement comprend sa définition, en particulier sa sélection ou sa génération, et/ou son paramétrage ; et
dans lequel le procédé présente l'étape au moins en partie automatisée :
- de génération et/ou de modification (S40) d'un programme de commande de l'ensemble d'automatisation en utilisant le critère d'événement ; ou
présente les étapes au moins en partie automatisées :
- de détection (S40) de données actuelles au moyen de l'ensemble de moyens de détection pendant un mode de fonctionnement de l'ensemble d'automatisation, en particulier de l'ensemble robotisé ; et,
- de commande (S40) de l'ensemble d'automatisation, en particulier de l'ensemble robotisé, sur la base des données actuelles et du critère d'événement, en particulier de déclenchement d'au moins une action de l'ensemble d'automatisation, en particulier de l'ensemble robotisé, à la suite d'une satisfaction du critère d'événement par les données actuelles.

2. Procédé selon la revendication 1, avec les étapes au moins en partie automatisées :
de mise à disposition (S10) d'au moins une deuxième séquence de deuxièmes données d'ordonnées (q₁, q₂, dq₂/dt, τ₁, τ₂) associées à des points d'abscisses (t) successifs sur la base de données d'apprentissage (q₁, q₂, τ₁, τ₂) ; et
de détermination (S30) du premier critère d'événement sur la base de la deuxième séquence.

3. Procédé selon l'une quelconque des revendications précédentes, avec les étapes au moins en partie automatisées :
d'identification (S20) d'au moins un deuxième point d'événement parmi les premiers points d'abscisses successifs de la première séquence ; et
de détermination (S30) du premier et/ou au moins d'un deuxième critère d'événement sur la base de la première séquence et du deuxième point d'événement.

4. Procédé selon l'une quelconque des revendications précédentes, **caractérisé en ce que** la mise à disposition d'une séquence de données d'ordonnées associées à des points d'abscisses successifs sur la base de données d'apprentissage comprend une détection au moins en partie automatisée des données d'apprentissage au moyen de l'ensemble de moyens de détection pendant un mode de fonctionnement de l'ensemble d'automatisation, en particulier de l'ensemble robotisé, ou une simulation au moins en partie automatisée des données d'apprentissage.

5. Procédé selon l'une quelconque des revendications précédentes, **caractérisé en ce que** la mise à disposition d'une séquence de données d'ordonnées associées à des points d'abscisses successifs sur la base de données d'apprentissage comprend une sauvegarde, un chargement et/ou un traitement au moins en partie automatisés, en particulier un filtrage, une amplification, une différenciation et/ou une intégration simple ou multiple des données d'apprentissage en particulier simulées et/ou détectées au moyen de l'ensemble de moyens de détection pendant le mode de fonctionnement de l'ensemble d'automatisation.

6. Procédé selon l'une quelconque des revendications précédentes, **caractérisé en ce que** l'identification d'un point d'événement parmi les points d'abscisses d'une séquence comprend une détection au moins en partie automatisée d'une entrée d'utilisateur et/ou d'un signal d'événement de celle-ci par l'ensemble de moyens de détection, en particulier pendant une détection des données d'apprentissage au moyen de l'ensemble de moyens de détection pendant un mode de fonctionnement de l'ensemble d'automatisation, en particulier de l'ensemble robotisé.

7. Procédé selon la revendication précédente, avec les étapes au moins en partie automatisées :
de détection (S10) des données d'apprentissage au moyen de l'ensemble de moyens de détection pendant un mode de fonctionnement de l'ensemble d'automatisation, en particulier de l'ensemble robotisé ;
de répétition (S20) dudit mode de fonctionnement ou d'un enregistrement de celui-ci à une vitesse réduite, en particulier variable, et/ou avec des pauses, en particulier variables, ; et
de détection (S20) de l'entrée d'utilisateur pendant ladite répétition.

8. Procédé selon l'une quelconque des revendications précédentes, **caractérisé en ce que** la détermination d'un critère d'événement sur la base d'au moins une séquence et d'au moins un point d'événement comprend une variation au moins en partie automatisée d'au moins un critère, en particulier d'une valeur de seuil, pour des données d'ordonnées de ladite séquence.

9. Procédé selon l'une quelconque des revendications précédentes, **caractérisé en ce que** la variation comprend une détection au moins en partie automatisée d'une spécification d'utilisateur à cet effet.

10. Procédé selon l'une quelconque des revendications précédentes, **caractérisé en ce qu'**au moins un critère d'événement peut être en temps réel.

11. Procédé selon l'une quelconque des revendications précédentes, **caractérisé en ce qu'**au moins un moyen de détection de l'ensemble de moyens de détection détecte de manière au moins en partie automatisée des forces de l'ensemble robotisé, en particulier dans des articulations d'au moins un robot de l'ensemble robotisé.

12. Système qui est mis au point pour mettre en œuvre le procédé selon l'une quelconque des revendications précédentes.

13. Ensemble avec un ensemble d'automatisation, qui présente un ensemble robotisé avec au moins un robot (10) et un ensemble de moyens de détection avec au moins un moyen de détection (21-23), et un système selon la revendication 12 pour commander ledit ensemble d'automatisation.

14. Produit-programme d'ordinateur avec un code de programme qui est stocké sur un support lisible par ordinateur pour mettre en œuvre un procédé selon l'une quelconque des revendications précédentes 1 à 11.
